# EUROPEAN PATENT SPECIFICATION

(11) **EP 1 010 366 B1**
(45) Date of publication and mention of the grant of the patent: **25.02.2004**
(21) Application number: 99121603.7
(22) Date of filing: 29.10.1999
(51) Int. Cl.: A01K 1/015, A23K 1/14, A01N 65/00, C05F 3/00

(54) **Animal husbandry and bedding used**
Tierzucht und Streu dafür
Elevage d'animaux et litière utilisée à cet effet

(30) Priority: 18.12.1998 IT TO981061; 13.04.1999 IT MI990761
(43) Date of publication of application: 21.06.2000
(73) Proprietor: Mazzoli, Ernesto, 22030 Montorfano (IT)
(72) Inventor: Mazzoli, Ernesto, 22030 Montorfano (IT); Santini, Antonello, 22020 Cavallasca (IT); Crotti, Gabriele, 22073 Villaguardia (IT)
(74) Representative: Franzolin, Luigi

(56) References cited:
- EP-A- 0 867 112
- WO-A-96/28393
- WO-A-98/08397
- DE-A- 19 613 930
- FR-A- 2 722 495
- GB-A- 2 308 538
- NL-C- 1 006 778
- US-A- 4 217 858

## Description

The present invention relates to animal husbandry and a method for rearing and caring for animals in general, with particular attention to animals of zootechnical importance such as pigs, cattle, rabbits, horses etc. It can also be applied, however, to domestic animals and pets in general, as well as to birds, reptiles, rodents and exotic animals.

It is known that to maintain health in animals all farmers must do their utmost to maintain a healthy environment, which for the most part means an environment which is not particularly moist, and which does not encourages the growth of bacteria, with a controlled temperature etc.

Currently, the materials predominantly utilised as bedding for animals are wood shavings and cereal straw, which allow more or less absorption of liquids produced by the animals themselves. The methods utilised until now envisage the bedding having a limited life (a few days) and require a frequent change of bedding and, therefore, a constant presence of man close to the animals. It has been proven that the presence of man disturbs animals, causing a significant psychological and physical distress, which necessarily affects the quantity and quality of the meat produced.

It is, moreover, known that one of the serious problems of rearing animals, particularly experienced in rearing animals for slaughter (pigs, cattle etc), and also present in the case of other animals, is constituted by the risk of poisoning by mycotoxins: these are metabolites of fungal replication which express their toxicity if taken up by animals or man. Some of the materials traditionally used for animal feed (cereals, maize, cotton seeds etc) are just those products which are easily contaminated by mycotoxins: if animals ingest contaminated fodder illnesses are observed: consumption by man of meat or dairy produce coming from contaminated sources transfers the poison to man with serious risks for health.

However, the above-mentioned known bedding based on wood shavings or cereal straw constitutes a relatively favourable medium for the development of mycotoxins: above all for animals which are used to rolling in their bedding (thinking here of pigs) there is an evident risk that the mycotoxins present in the bedding itself may become transferred by the movements of the animals into their fodder and therefore transmit to the animal and from this, then, to man.

There is therefore a requirement for a method of husbandry which allows the animal welfare to be increased, avoiding frequent additions of material or a frequent change of bedding. Moreover, there is also a requirement for maintaining animals in conditions which reduce the presence of mycotoxins as much as possible.

These and other objects are achieved by the present invention which relates to a method of animal husbandry comprising the use of a bedding constituted by a composition comprising at least 40% by weight, preferably 50% by weight, of coconut fibre in particular of the type known as "cocopeat" as defined in Claim 1.

It has in fact been suprisingly found by the applicants that a bedding constituted by a composition comprising at least 40% by weight, preferably at least 50% by weight of coconut fibre having particular characteristics not only possesses a high capacity for absorption of liquids, but also offers a significant thermal insulation, eliminates bad smells, has almost no need for changes and significantly improves, therefore, the quality of life of the animals; the bedding forming the subject of the invention has, moreover, the capacity of inhibiting the development of the mycotic forms able to produce mycotoxins and aflatoxins, so that the bedding itself is, in use, free from mycotoxins.

It has further been found that the use of this particular coconut fibre in animal husbandry improves the quality of the meat of the animals themselves and in the case of cattle, has been also found to improve the quality of the milk produced.

The manure obtained is of high quality for agronomic use and does not require long fermentation processes.

The method of animal husbandry indicated above relates particularly, but not exclusively, to animals for slaughter, such as, for example, pigs, cattle, horses and rabbits.

The coconut fibres to be utilised in the method of the invention must have a filamentary form, with dimensions which vary from a few microns to about thirty centimetres in length, and from a few microns up to about one millimetre in thickness. Moreover, they must have a carbon/nitrogen ratio calculated for dry substances, equal to about 114, a lignin content equal to about 45%, an ash content equal to about 8% and a raw protein content equal to about 3%. It has been found also that a fundamental factor is that of the geographical provenance, such that the coconut fibres utilised in the method according to the invention must be those defined commercially as "cocopeat", which are characterised, in use according to the method of the invention, by a volume increase less than 5% in the first fifteen days and a reduction in the rearing cycle of at least 10-20% depending on the age and type of animals.

The composition utilised in the method of animal husbandry which forms the subject of the present invention can be used both in loose form which can be strewn on the ground and in the form of pressed bales which can be dispersed simply on the ground and with different dimensions depending on the animal housing.

Before being used the fibres may be subjected to a milling treatment which, however, maintains the integrity of the fibres themselves, absolutely avoiding the reduction into powder form.

Preferably, the bedding is constituted by a composition comprising at least 40% by weight of the said coconut fibres and at least one other component preferably chosen from the group constituted by: natural and synthetic clays (granular zeolite, sepiolite, clinoptinolite, bentonite, perlite etc), peat and mixtures thereof; or, more generally, from known bedding materials chosen from the group constituted by: cereal straw (wheat, oats, flax etc), cereal chaff, ground or whole rice husks, bran, cereal waste, milled or whole hemp, chippings, sawdust, wood sharings, ground or whole maize stalks, ground or whole millet ground or whole sugar cane, vegetable carbon, chopped or milled branches, chopped and/or ground residues of green and woody prunings or loppings, cellulose waste, organic domestic refuse, organic by-products of textile industries, feathers, fruit peel, cocoa shells, wool, tubers, synthetic sponges, sponges (calcareous, calcisponges, hexactinelliatae) seaweeds, actinogranulomycetes, aluminosilicates, carob and its derivatives, enzymes and pro-enzymes from cellulose, lipase, amylase, protease, etc), bicarbonate; and their mixtures.

On the basis of the above, the present invention extends to a method of rearing animals in conditions of high welfare, in which the use of the said material based on coconut fibre of predetermined characteristics as bedding makes it possible to inhibit the development of mycotic forms capable of generating mycotoxins and aflatoxins.

One of the principal advantages of the said method reside in the effect that it can be applied, unlike other methods, without having recourse to new zootechnical constructions. In fact, for example, for rearing animals on gratings the modification needed requires only a modest investment and the restructuring can be effected by the farmer himself and involves, in any event, investments which can be ammortised in a very short time. Moreover, the bedding according to the invention is able to provide optimum results even in zootechnical structures which do not have the improved aeration conditions.

Another object of the present invention is that of providing a method for combating the unpleasant odours in places subject to the possible occurrence of natural fermentation processes, not limited to structures for rearing animals, but above all directed to overcoming unpleasant odours which can be generated in waste tips.

This object is achieved by the present invention in that it relates to a method for reducing the unpleasant odours in places subject to possible occurrence of natural fermentation processes, in particular waste tips, consisting of the use of a composition containing at least 50% of coconut fibre to cover the material subject to the possible fermentation, in particular a refuse heap, as claimed in Claim 12.

In particular, the use according to the invention envisages the waste tip being filled with a system of alternate layers of refuse and a composition containing coconut fibres. Each layer has a thickness which varies between 20cm and lm, preferably between 30cm and 60cm, depending on the dimensions of the heap.

In a variant, a heap of refuse in the open air, which defines a tip or "hill" is treated by covering it with a single layer of the coconut fibre composition, preferably of a thickness of about 50cm.

Similarily, in the field of purifiers, the coconut fibre composition according to the invention, if positioned in the purifier, for example as a filter, would be able to eliminate any form of bad odour from the purifier itself.

Finally, another use of the coconut fibre composition according to the invention, strictly connected with animal husbandry and welfare which constitutes one of the principal aspects of the invention, consists in mixing it into foodstuffs intended for animal consumption, in this way contributing to a reduction in the incidence of the risk of pollution thereof by aflatoxins.

One advantage common to all the aspects of the invention mentioned above consists, finally, in the fact that the installations (for animal husbandry, waste tips etc) are greatly preserved from deterioration consequent on corrosion by contact with gases originating from fermentation, such as those generally present in the vapours which generate unpleasant odours.

Further characteristics and advantages of the present invention will become clearly apparent from the non-limitative examples of embodiments which follow, provided purely for the purpose of illustrating the invention itself and with reference to Figures from 1 to 3, which show several graphic comparisons.

### EXAMPLES

### EXAMPLES 1-6

The following examples consist in the use of coconut fibre as bedding for milking cows, fattening pigs, horses, rabbits and heifers; the time period for experimentation was six consecutive weeks, with a sample of coconut fibre being taken at the end of each week, on which the analysis of the following parameters was made: dry substance, total nitrogen, ammoniacal nitrogen, lead, zinc and copper. All the analyses were duplicated according to the methods of the A.O.A.C (Association Of Analytical Chemists, "Official Methods of Analysis", sixteenth edition, Arlington, Virginnia, USA).

Simultaneously with the withdrawal of samples the temperature of the bedding was taken.

Each example is accompanied by a comparative example utilising a bedding of a type normally utilised for the type of animal husbandry considered, to which the same methods of removal and analysis utilised for the bedding constituted by the coconut fibre composition was applied. At the end of each example there is illustrated a table which carries the data obtained on the bedding samples constituted by the coconut fibre composition and data obtained on the comparison bedding sample.

The additions of materials to the bedding (composition comprising coconut fibre or comparison material) reported in the examples were decided by zootechnical experts who followed the individual experiments, basing this decision exclusively on the general animal welfare. Therefore, for a significant interpretation of the data obtained it is necessary to take account of the fact that the comparison bedding needed much more frequent additions and changes for all the species of animals tested.

### EXAMPLE 1 - Coconut fibre bedding for milking cattle -

At the beginning of the experiment the composition comprising coconut fibre was distributed into 23 cubicles in a quantity of 5.5 Kg/m², and each having a surface 2.5m² and receiving one cow. Subsequently the following additions were made: 1 Kg/cubicle after one week, 1.5 Kg per cubicle after three weeks and 3 Kg per cubicle after 4 weeks. The total consumption per cubicle was 19 Kg in 6 weeks.

The above indicated chemical parameters were determined analytically on samples taken weekly, which are reported in Table 1.

### Example 1a (Comparison) - Bedding of wood chippings for milking cows-

Example 1 was repeated with the exception of the material utilised as bedding and its quantities: at the beginning of the experiment the wood chippings were distributed in a quantity of 7 Kg per m²; subsequently 4 Kg per cubicle were added each week for the first three weeks and at the end of the fourth week the bedding was completely renewed. The total consumption was, therefore, 54 Kg per cubicle over six weeks. The results of the analysis are reported in Table 1.

**Table 1**

| Week | | 1 | 2 | 3 | 4 | 5 | 6 |
|---|---|---|---|---|---|---|---|
| Consumption (Kg/Cubicle) | Coconut fibre (13.5)* | 1 | -- | 1.5 | 3 | -- | -- |
| | Chippings (21)* | 4 | 4 | 4 | 21** | -- | -- |
| Dry substance (%) | Coconut fibre | 50 | 38 | 45 | 54 | 55 | 52 |
| | Chippings | 55 | 50 | 48 | 48 | 53 | 48 |
| Total Nitrogen (%)*** | Coconut fibre | 2.4 | 2.7 | 2.7 | 2.8 | 2.2 | 2.3 |
| | Chippings | 2.5 | 2.4 | 2.2 | 1.5 | 1.7 | 1.8 |
| Ammoniacal Nitrogen (%)*** | Coconut fibre | 0.18 | 0.22 | 0.22 | 0.18 | 0.15 | 0.53 |
| | Chippings | 0.25 | 0.30 | 0.24 | 0.16 | 0.15 | 0.42 |
| Lead (ppm) | Coconut fibre | 6.1 | 6.7 | 6.4 | 6.5 | 6.6 | 6.8 |
| | Chippings | 6.4 | 6.4 | 7.2 | 6.4 | 7.1 | 6.9 |
| Zinc (ppm) | Coconut fibre | 68.4 | 70.6 | 75.6 | 80.3 | 78.4 | 83.1 |
| | Chippings | 82.4 | 68.4 | 53.8 | 65.4 | 73.1 | 59.6 |
| Copper (ppm) | Coconut fibre | 28.3 | 31.5 | 33.4 | 36.2 | 34.2 | 35.8 |
| | Chippings | 36.1 | 29.8 | 21.4 | 25.6 | 30.4 | 27.8 |
| Temperature (°C) | Coconut fibre | 21.5 | 23.8 | 20.7 | 21.5 | 24.2 | 24.6 |
| | Chippings | 29.2 | 31.8 | 30.4 | 30.8 | 33.7 | 28.1 |

| | | | | | | | |
|---|---|---|---|---|---|---|---|
| * initial quantity of material (coconut fibre or wood chippings) | | | | | | | |
| ** the bedding of wood chippings was completely renewed | | | | | | | |
| *** the percentage is calculated on the quantity of dry substance | | | | | | | |

### Example 1b - Examination of milk -

During the six weeks of the experiment milk from the cattle in lactation which had bedding made from the composition of the invention was taken weekly. In parallel samples of milk, from milking cows which had commonly utilised bedding (wood chippings) were analysed, according to the same testing methodology. The analysis was concentrated on the presence of somatic cells in the milk, thus being able to evaluate the health of the cows udders.

As a result it was found, during the experiments, that a progressive reduction occurred in the somatic cells in milk from 70% of the cattle the bedding of which was constituted by the composition of coconut fibres; whilst a progressive increase was found in the somatic cells in the milk coming from 80% of the cattle having a wood chip bedding.

### Example 2 - Bedding of coconut fibre for pigs for non-intensive fattening -

The experiment was performed on animals in the last phase of fattening, of average weight of about 140 kg. The pigs were reared in pens of 56m² each within a shed which contained 10 pens in all. In each pen were 25 animals fed with a dry diet based on maize flour and soya extract.

560 kg of composition comprising coconut fibre, equivalent to 10 kg per m² were distributed into a pen; the bedding remained on the ground until the end of the experiment, that is to say the total material used for 6 weeks was 560 kg.

The chemical parameters indicated in section "example 1-6" were determined analytically on specimens taken weekly.

### Example 2a (comparison) - Bedding of maize stalks for fattening pigs-

Example 2 was repeated with the exception of the material and quantities utilised as bedding: at the beginning of the experiment 250 kg, equal to about 4.5 kg per m² of maize stalks were distributed into a pen. This type of bedding was completely renewed each week, which means that at the end of the experiment (six weeks) 1500 kg of maize stalks had been utilised.

**Table 2**

| (-Bedding for fattening pigs) | | | | | | | |
|---|---|---|---|---|---|---|---|
| Week | | 1 | 2 | 3 | 4 | 5 | 6 |
| Consumption (Kg) | Coconut fibre (560)* | -- | -- | -- | -- | -- | -- |
| | Maize stalks** (250)* | 250 | 250 | 250 | 250 | 250 | -- |
| Dry substance (%) | Coconut fibre | 50 | 40 | 35 | 40 | 42 | 40 |
| | Maize stalks | 68 | 40 | 60 | 58 | 80 | 38 |
| Total Nitrogen (%)*** | Coconut fibre | 2.3 | 2.7 | 4.5 | 3.0 | 3.0 | 3.5 |
| | Maize stalks | 1.7 | 2.4 | 1.5 | 1.5 | 1.5 | 2.0 |
| Ammoniacal Nitrogen (%)*** | Coconut fibre | 1.05 | 1.45 | 0.90 | 0.70 | 0.58 | 1.00 |
| | Maize stalks | 0.38 | 0.45 | 0.25 | 0.25 | 0.20 | 0.45 |
| Lead (ppm) | Coconut fibre | 7.0 | 7.1 | 7.1 | 7.2 | 7.3 | 7.0 |
| | Maize stalks | 5.9 | 6.1 | 6.4 | 6.5 | 6.4 | 6.6 |
| Zinc(ppm) | Coconut fibre | 30.6 | 28.6 | 30.0 | 29.9 | 30.1 | 30.3 |
| | Maize stalks | 32.2 | 34.3 | 35.0 | 34.2 | 33.8 | 34.1 |
| Copper(ppm) | Coconut fibre | 16.2 | 18.0 | 18.2 | 17.9 | 17.5 | 18.1 |
| | Maize stalks | 18.6 | 19.0 | 18.9 | 19.2 | 19.4 | 21.0 |
| Temperature (°C) | Coconut fibre | 29.6 | 29.8 | 27.5 | 30.2 | 28.7 | 22.3 |
| | Maize stalks | 32.8 | 32.2 | 28.8 | 27.4 | 35.1 | 25.1 |

| | | | | | | | |
|---|---|---|---|---|---|---|---|
| * initial quantity of material (coconut fibre or maize stalks) | | | | | | | |
| ** the bedding of maize stalks is completely renewed each week | | | | | | | |
| *** the percentage is calculated on the quantity of dry substance | | | | | | | |

### Example 3 - Bedding of coconut fibre for rabbits-

The surface intended for animal cages is about 32 m² on which are distributed 80 cages, each having a surface area of about 0.4 m² disposed in two rows. Cages rest on a metal structure and the floor of the cage is spaced about 70 cm above the floor of the housing. The bedding for collection of faeces is positioned beneath the cages on a support of plastics material.

The experiment related to 40 of the 80 cages having a total surface area of 16 m², the quantity of coconut fibre composition was 4 kg per m², giving a total of 64 kg, and after three weeks 1 kg per m² was added, to give a total addition of 16 kg. At the end of the experiment 80 kg of coconut fibre composition had been used. The above- indicated chemical parameters were determined analytically on samples taken weekly.

### Example 3a (Comparison) - Bedding of wood chippings for rabbits -

Example 3 was repeated with the exception of the materials and quantities utilised as bedding: the experiment related to the remaining 40 of the 80 cages, for a total surface area of 16 m²; the quantity of wood chippings was 5 kg per m², for a total of 80 kg, after one week 7 kg of wood chippings were added and after two weeks the bedding was completely renewed as it was by then exhausted. After the fourth week the bedding was again renewed. At the end of the experiment 247 kg of wood chippings had been used.

**Table 3**

| (― Bedding for rabbits -) | | | | | | | |
|---|---|---|---|---|---|---|---|
| Week | | 1 | 2 | 3 | 4 | 5 | 6 |
| Consumption (Kg/Cubicle) | Coconut fibre (64)* | -- | -- | 16 | -- | -- | -- |
| | Chippings (80)* | 7 | 80** | -- | 80** | -- | -- |
| Dry substance (%) | Coconut fibre | 65 | 58 | 58 | 43 | 52 | 34 |
| | Chippings | 54 | 58 | 42 | 60 | 60 | 55 |
| Total Nitrogen (%)*** | Coconut fibre | 1.5 | 2.0 | 2.0 | 1.9 | 2.0 | 4.0 |
| | Chippings | 1.5 | 1.0 | 1.9 | 0.5 | 1.0 | 1.0 |
| Ammoniacal Nitrogen (%)*** | Coconut fibre | 0.25 | 0.77 | 0.45 | 0.40 | 0.77 | 0.77 |
| | Chippings | 0.25 | 0.38 | 0.40 | 0.16 | 0.38 | 0.20 |
| Lead (ppm) | Coconut fibre | 5.8 | 5.7 | 6.3 | 6.0 | 5.9 | 5.9 |
| | Chippings | 4.3 | 4.1 | 3.8 | 4.6 | 4.5 | 4.0 |
| Zinc (ppm) | Coconut fibre | 29.3 | 36.9 | 49.6 | 37.5 | 42.5 | 48.6 |
| | Chippings | 30.7 | 31.0 | 33.1 | 21.3 | 28.6 | 30.5 |
| Copper (ppm) | Coconut fibre | 4.8 | 9.7 | 11.6 | 6.5 | 10.2 | 12.3 |
| | Chippings | 3.6 | 4.1 | 4.4 | 5.2 | 4.5 | 4.9 |
| Temperature (°C) | Coconut fibre | 12.6 | 11.9 | 10 | 11.3 | 14.1 | 14.2 |
| | Chippings | 14.3 | 13.9 | 9.2 | 11.1 | 15.2 | 14.5 |

| | | | | | | | |
|---|---|---|---|---|---|---|---|
| * initial quantity of material (coconut fibre or wood chippings) | | | | | | | |
| ** the bedding of wood chippings was completely renewed | | | | | | | |
| *** the percentage is calculated on the quantity of dry substance | | | | | | | |

### Example 4 - Coconut fibre bedding for horses -

The experiment was performed on three boxes which measured 9.6 m². Into one box 108 kg of composition containing coconut fibres was distributed uniformly, corresponding to 1.25 kg per m². After three weeks 1 kg per m² was added, which corresponds to 9.6 kg per box. The total consumption of composition containing coconut fibre was 117.6 kg per box.

The above-indicated chemical parameters were determined analytically from samples taken weekly.

### Example 4a (comparison) - Bedding of wood chippings for horses -

Example 4 was repeated with the exception of the material and quantities utilised as bedding: at the beginning of the experiment 7 kg per m² were distributed for a total of 67 kg per individual box; subsequently the bedding had to be completely renewed after two and after four weeks. The total consumption was therefore 201 kg per individual box.

**Table 4**

| (-bedding for horses) | | | | | | | |
|---|---|---|---|---|---|---|---|
| Week | | 1 | 2 | 3 | 4 | 5 | 6 |
| Consumption (Kg/box) | Coconut fibre (108)* | -- | -- | 9.6 | -- | -- | -- |
| | Chippings (67)* | -- | 67** | -- | 67** | -- | -- |
| Dry substance (%) | Coconut fibre | 56 | 50 | 46 | 51 | 50 | 44 |
| | Chippings | 58 | 55 | 51 | 54 | 58 | 48 |
| Total Nitrogen (%)*** | Coconut fibre | 1.4 | 1.7 | 2.0 | 1.7 | 2.0 | 2.3 |
| | Chippings | 0.9 | 1.0 | 0.9 | 1.0 | 0.6 | 1.0 |
| Ammoniacal Nitrogen (%)*** | Coconut fibre | 0.30 | 0.32 | 0.40 | 0.30 | 0.25 | 0.42 |
| | Chippings | 0.22 | 0.24 | 0.22 | 0.20 | 0.15 | 0.20 |
| Lead (ppm) | Coconut fibre | 5.8 | 6.1 | 6.8 | 6.5 | 6.4 | 6.7 |
| | Chippings | 4.8 | 5.0 | 4.3 | 5.1 | 4.9 | 5.2 |
| Zinc(ppm) | Coconut fibre | 21.2 | 22.8 | 22.3 | 23.4 | 24.8 | 24.6 |
| | Chippings | 21.3 | 21.4 | 23.1 | 23.4 | 23.2 | 24.5 |
| Copper (ppm) | Coconut fibre | 10.5 | 11.9 | 12.7 | 12.9 | 12.5 | 13.4 |
| | Chippings | 5.9 | 13.5 | 16.0 | 18.2 | 8.5 | 10.3 |
| Temperature (°C) | Coconut fibre | 17 | 16.6 | 15.2 | 16.5 | 20 | 18 |
| | Chippings | 15.9 | 15.7 | 11.6 | 15.1 | 16.4 | 16.4 |

| | | | | | | | |
|---|---|---|---|---|---|---|---|
| * initial quantity of material (coconut fibre or wood chippings) | | | | | | | |
| ** the bedding of wood chippings was completely renewed | | | | | | | |
| *** the percentage is calculated on the quantity of dry substance | | | | | | | |

### Example 5 - Bedding for heifers -

The experiment was conducted in a small covered stall used as a shelter for heifers on permanent bedding, where normally wood chippings were utilised. Eight heifers were present in the stall. The surface of the bedding was sub-divided into two identical zones of about 17.5 m² in one of which 7 kg per m² of coconut fibre was distributed for a total of 122.5 kg of composition containing coconut fibre and in the other 10 kg per m² were distributed to give a total of 175 kg. For the whole duration of the experiment no material was added to either bedding zone.

The above-indicated chemical parameters were determined analytically from samples taken weekly. For a correct analysis of the data of Table 5 it must be considered that the eight heifers had, for the majority of the time and at their own initiative, remained on the bedding constituted by the composition containing coconut fibres. In fact, in preference tests in which the heifers were left free to choose from a traditional bedding of chippings and that according to the invention, all the heifers gravitated towards the bedding of the invention.

**Table 5**

| (-bedding for heifers) | | | | | | | |
|---|---|---|---|---|---|---|---|
| Week | | 1 | 2 | 3 | 4 | 5 | 6 |
| Consumption (Kg) | Coconut fibre (112.5)* | -- | -- | -- | -- | -- | -- |
| | Chippings (175)* | -- | -- | -- | -- | -- | -- |
| Dry substance (%) | Coconut fibre | 70 | 45 | 35 | 35 | 35 | 40 |
| | Chippings | 80 | 45 | 50 | 60 | 60 | 30 |
| Total Nitrogen (%)*** | Coconut fibre | 0.7 | 1.5 | 1.6 | 1.0 | 1.5 | 2.0 |
| | Chippings | 0.2 | 0.5 | 0.9 | 0.7 | 1.0 | 1.6 |
| Ammoniacal Nitrogen (%)*** | Coconut fibre | 0.14 | 0.14 | 0.12 | 0.14 | 0.18 | 0.40 |
| | Chippings | 0.10 | 0.18 | 0.12 | 0.12 | 0.12 | 0.32 |
| Lead (ppm) | Coconut fibre | 8.8 | 7.8 | 7.9 | 8.3 | 8.1 | 7.6 |
| | Chippings | 10.6 | 8.9 | 9.8 | 9.5 | 10.3 | 8.8 |
| Zinc(ppm) | Coconut fibre | 19.8 | 20.3 | 20.6 | 21.7 | 20.7 | 22.3 |
| | Chippings | 20.5 | 23.1 | 22.7 | 24.5 | 23.6 | 24.1 |
| Copper (ppm) | Coconut fibre | 6.8 | 6.8 | 7.3 | 6.7 | 7.0 | 7.3 |
| | Chippings | 6.0 | 6.7 | 7.8 | 6.7 | 7.5 | 6.4 |
| Temperature (°C) | Coconut fibre | 16 | 14.2 | 11 | 14.2 | 17.3 | 17.8 |
| | Chippings | 14.4 | 13.4 | 10.4 | 13.5 | 16.6 | 16.4 |

| | | | | | | | |
|---|---|---|---|---|---|---|---|
| * initial quantity of material (coconut fibre or wood chippings) ∗** the bedding of wood chippings was completely renewed | | | | | | | |
| *** the percentage is calculated on the quantity of dry substance | | | | | | | |

### Example 6 - Bacteriological examination of bedding having a composition containing coconut fibre and one containing wood chippings -

A part (50 g) of the specimens taken weekly were subjected to microbiological analysis at the diagnostic microbiology laboratory of the Milan section of the "Istituto Zooprofilattico Sperimentale della Lombardia e dell'Emilia Romagna". These analyses were performed for determination of E.coli, Enterobacteria, pseudomonas, mycetes and salmonella according to the manual of quality in use at the Institute.

The results of the analyses at time 0 (before use of the bedding) and at periodic intervals of time are recorded in Table 6, by animal species.

In the Table the letters C.F. mean coconut fibre and the references ra, ho, co and he respectively mean rabbits, horses, cattle and heifers.

**Table 6**

| (-bacteriological examination)* | | | | | | |
|---|---|---|---|---|---|---|
| Week | 1 | 2 | 3 | 4 | 5 | 6 |
| E-COLI | | | | | | |
| CF/Ra | 0 | 0 | 0 | 1500000 | 1000 | 0 |
| Chippings/Ra | 0 | 0 | 0 | 0 | 0 | 0 |
| CF/Ho | 0 | 50000 | 1500000 | 500000 | 500000 | 300000 |
| Chippings/Ho | 0 | 0 | 2000000 | 5000 | 50000 | 50000 |
| CF/Co | 0 | 500000 | 10000000 | 10000000 | 5000000 | 10000000 |
| Chippings/Co | 0 | 500000 | 100000 | 15000000 | 35000000 | 500000 |
| CF/He | | | | | | |
| Chippings/He | 0 | 0 | 5000000 | 5000000 | 5000000 | 1000000 |

| PSEUDOMONAS | | | | | | |
|---|---|---|---|---|---|---|
| CF/Ra | 300 | 700000 | 250000 | 40000 | 25000 | 0 |
| Chippings/Ra | 400 | 0 | 20000 | 0 | 0 | 5000 |
| CF/Ho | 300 | 20000 | 10000 | 0 | 500 | 0 |
| Chippings/Ho | 400 | 1430000 | 25000 | 15000 | 500 | 0 |
| CF/Co | 300 | 2600000 | 1000000 | 400000 | 250000 | 500000 |
| Chippings/Co | 400 | 150000 | 150000 | 2000000 | 20000000 | 1000000 |
| CF/He | | | | | | |
| Chippings/He | 400 | 10000 | 1000 | 0 | 0 | 100000 |

| ENTEROBACTERIACAE | | | | | | |
|---|---|---|---|---|---|---|
| CF/Ra | 20000 | 310000 | 4500000 | 10000000 | 15000 | 0 |
| Chippings/Ra | 21200 | 770000 | 0 | 5000 | 0 | 5000 |
| CF/Ho | 20000 | 6400000 | 1000000 | 1500000 | 10000000 | 0 |
| Chippings/Ho | 21200 | 5000000 | 2000000 | 5000000 | 400000 | 0 |
| CF/Co | 20000 | 10600000 | 15000000 | 30000000 | 15000000 | 500000 |
| Chippings/Co | 21200 | 5600000 | 4000000 | 20000000 | 20000000 | 1000000 |
| CF/He | | | | | | |
| Chippings/He | 21200 | 0 | 5000000 | 15000000 | 5000000 | 100000 |

| MYCETES | | | | | | |
|---|---|---|---|---|---|---|
| CF/Ra | 110000 | 630000 | 50000000 | 25000000 | 25000 | 1000000 |
| Chippings/Ra | 3000000 | 3000000 | 1550000 | 30000000 | 150000 | 5000000 |
| CF/Ho | 110000 | 3000000 | 500000 | 500000 | 20000000 | 5000000 |
| Chippings/Ho | 3000000 | 3000000 | 30000000 | 10000000 | 2000000 | 5000000 |
| CF/Co | 110000 | 3000000 | 10000000 | 30000000 | 25000 | 35000000 |
| Chippings/Co | 3000000 | 3000000 | 6000000 | 40000000 | 25000000 | 3000000 |
| CF/He | | | | | | |
| Chippings/He | 3000000 | 1100000 | 20000000 | 50000 | 5000000 | 4000000 |

| | | | | | | |
|---|---|---|---|---|---|---|
| * the results are expressed in units of UFC/gr | | | | | | |

### EXAMPLE 7

Utilising the compositions listed in the following Tables I, II, III and IV different beddings were produced and were subsequently utilised for rearing different types of farm animals (pigs for fattening, cattle for milk and meat, horses, rabbits).

**Table I**

| Component | % |
|---|---|
| Coconut fibre | 40ö99 |
| Natural and/or synthetic clays | 0.1ö40 |
| Bicarbonate | 0.1ö40 |

**Table II**

| Component | % |
|---|---|
| Coconut fibre | 40ö99 |
| Natural and/or synthetic clays | 0.1ö40 |
| Sugar cane fibre | 0.1ö50 |

**Table III**

| Component | % |
|---|---|
| Coconut Fibre | 40ö99 |
| Natural and/or synthetic clays | 0.1ö40 |
| Cereal straw | 0.1ö50 |

**Table IV**

| Component | % |
|---|---|
| Coconut fibre | 40ö99 |
| Peat | 1ö60 |

All the beddings were kept under observation to check for the possible development of contamination by mycotoxins during complete rearing cycles for the animals: the presence of mycotoxins in the bedding was not ever encountered nor was it found in the environment. The method of the invention has therefore made it possible to avoid, in the absence of external contamination, the spontaneous development of mycotoxins in the rearing environment.

On the other hand, by introducing mycotoxins from outside the rearing environment, for example by administration of partially contaminated fodder to the animals, it was observed that in any event the mycotoxins did not propagate further in the bedding: the effective action developed by the bedding in containing the diffusion of mycotoxins is therefore evident: even when mycotoxins were present in the rearing environment (for example introduced by contaminated feed) however, the bedding according to the invention is able to limit further diffusion, avoiding an aggravation of the situation.

Bedding formed with compositions of Tables I and II is particularly indicated for rearing cattle and pigs. Bedding formed with the compositions of Table III is particularly indicated for the use in Summer or in particularly warm climates. Bedding formed with the compositions of Table IV has been found to be particularly indicated for use in rearing horses.

### EXAMPLE 8 - Examination on the respiratory apparatus of pigs -

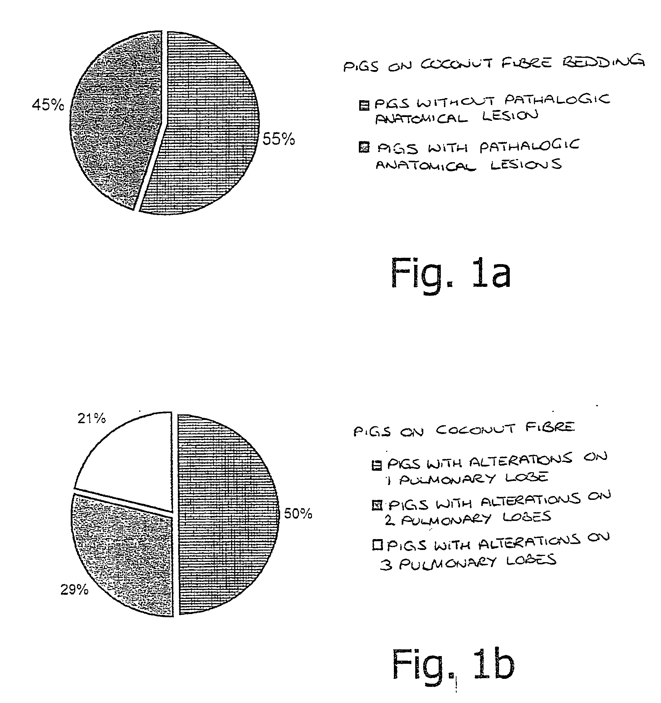

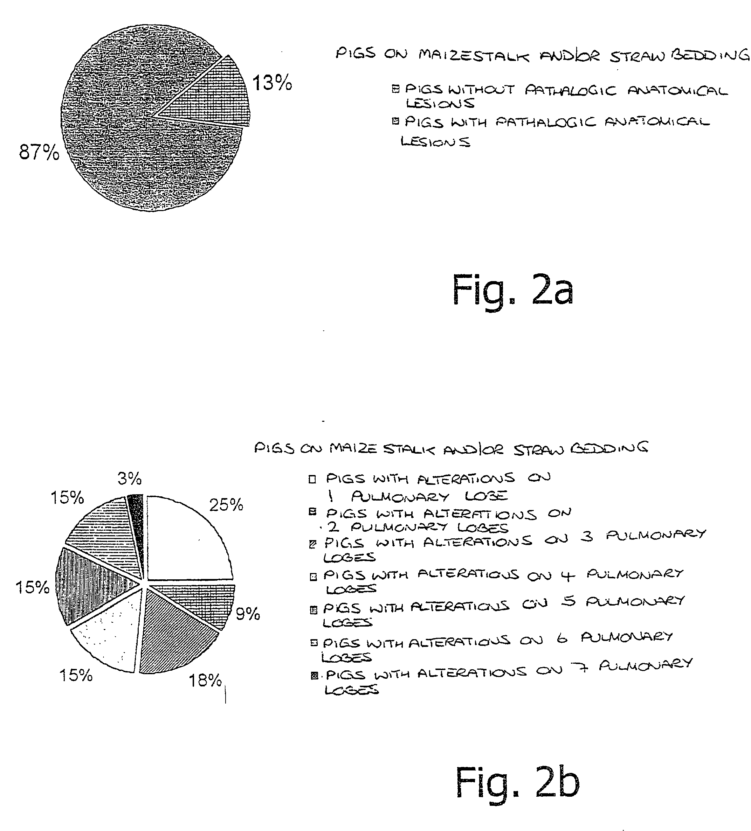

The pathologic anatomy of the respiratory apparatus of slaughtered pigs was tested after they had been reared for six months utilising bedding forming the subject of the invention, and the pathologic anatomical condition of the respiratory apparatus of pigs slaughtered after having been reared for six months utilising a traditional bedding were examined: the results of these tests are summarised in graphic form in the attached Figures 1 and 2: these results show that:
- 55% of pigs reared on bedding forming the subject of the invention had no pathologic anatomical alteration present (Figure 1a), and in the remaining animals the lesions are of modest size and fibrinous type (Figure 1b) limited to 1-3 pulmonary lobes; whilst
- Only 13% of pigs reared on a traditional bedding had no pathologic anatomical alteration (Figure 2a) and the remaining 87% had pulmonary lesions present such as necroses, fibrinoses, oedema and pulmonary infarctions, and there were, moreover, evidence of lesions referrable as neumoconeosis and neumomycosis (Figure 2b).

### EXAMPLE 9 - Examinations of respiratory and ophthalmic pathologies on horses-

In traditional horse rearing environments dust detrimentally affects the state of health of the animals, causing the appearance of respiratory and ophthalmic pathologies. Research was conducted during the Winter period overall during three months on two groups of riding horses by the endoscopic evaluation of the respiratory apparatus associated with a pulmonary washing. In the observation period the horses were visited endoscopically four times: the first day, the thirtieth day, the sixtieth day and the ninetieth day. In a first group utilising a bed based on ventilated chippings there were eight horses, whilst in a second group utilising the bedding forming the subject of the invention there were seven horses. The horseboxes having a bedding of chippings were moved every day with removal of solid faeces and chippings impregnated with urine, whilst in boxes with bedding forming the subject of the invention the staff limited themselves to the removal of the droppings. The results are reported in Tables 9a and 9b.

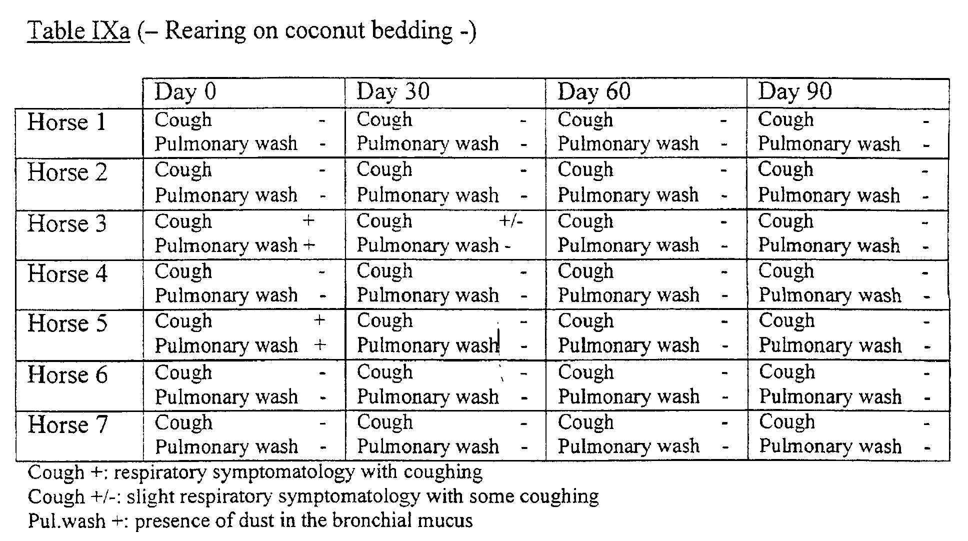

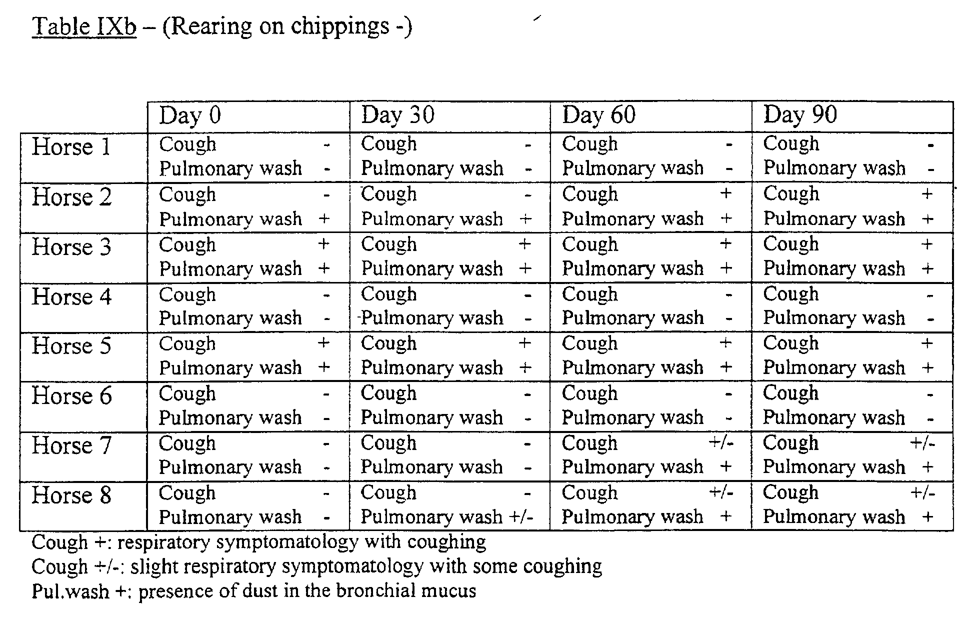

### EXAMPLE 10 - Experiment with coconut fibre bedding for rearing pigs over a period of 29 weeks -

The experiment was performed on animals of initial average weight of 38 kg and about four months old. Pigs were reared in pens of 56 m² each in a shed comprising ten pens. There were 48 animals present in each pen, fed with a dry diet based on soya extract.

Two adjacent pens were utilised for the experiment, one with a bed of coconut fibre and the other with a bed of maize stalks. In the pen having the bedding of coconut fibre 450 kg of this fibre was spread equal to 8 kg per m², whilst in the comparison pen 250 kg of maize stalks per pen was utilised as would be expected with this rearing regime. The maize stalk bedding was renewed periodically once each week; whilst the coconut fibre had periodic additions up to a total of 27 quintals (100 kg) per pen. The test lasted for 29 weeks until slaughter of the pigs.

Both in the pen with the coconut fibre bedding and in the comparison pen the temperature was detected weekly at ten separate detection points: the values detected are reported in the Tables Xa and Xb and show that the use of coconut fibre according to the invention makes it possible to maintain the bedding at significantly lower and substantially constant temperatures over time (thanks also to the thermal insulation effect of the coconut fibres according to the invention) with respect to the maize stalk bedding, with consequent improvements in the pig rearing conditions.

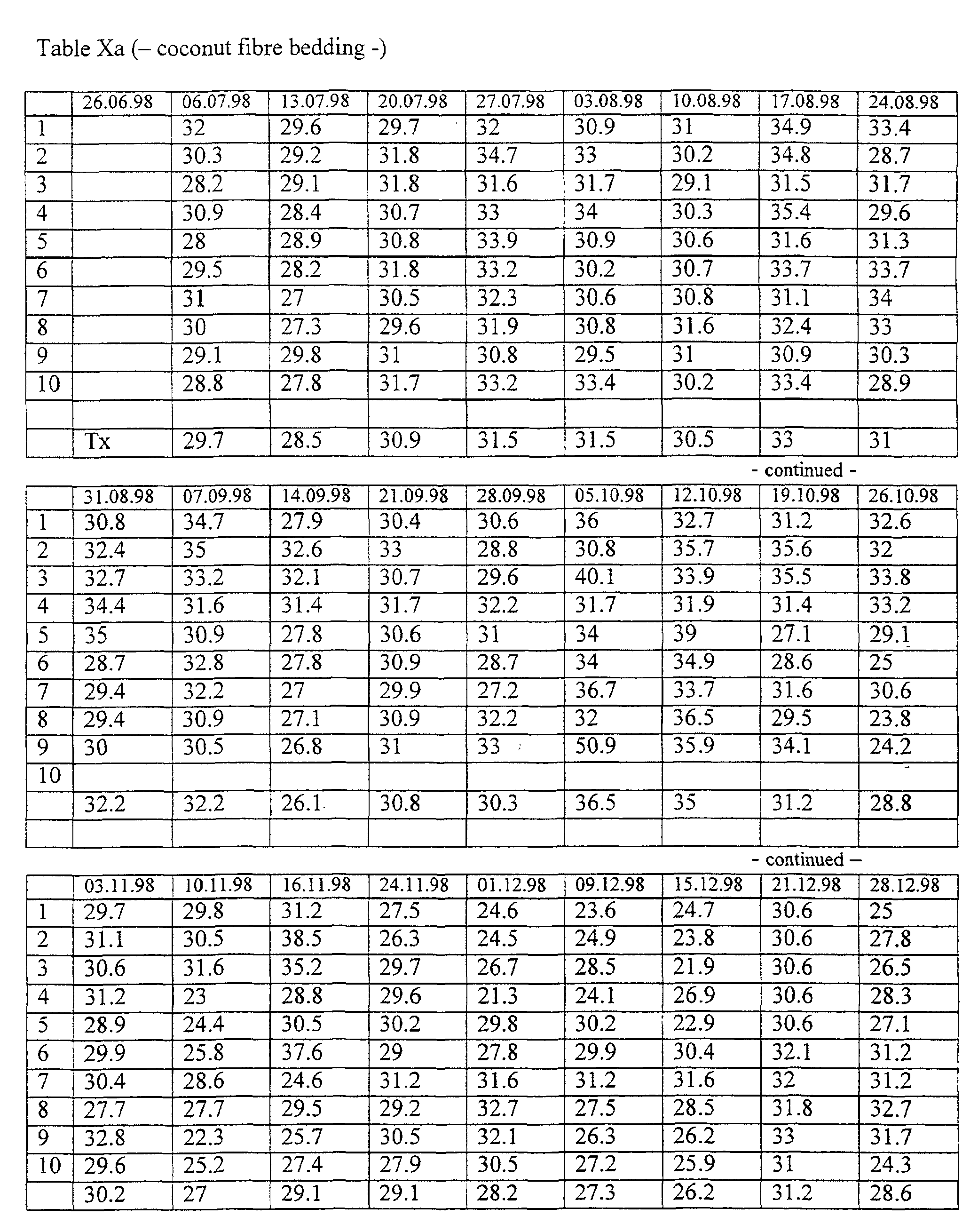

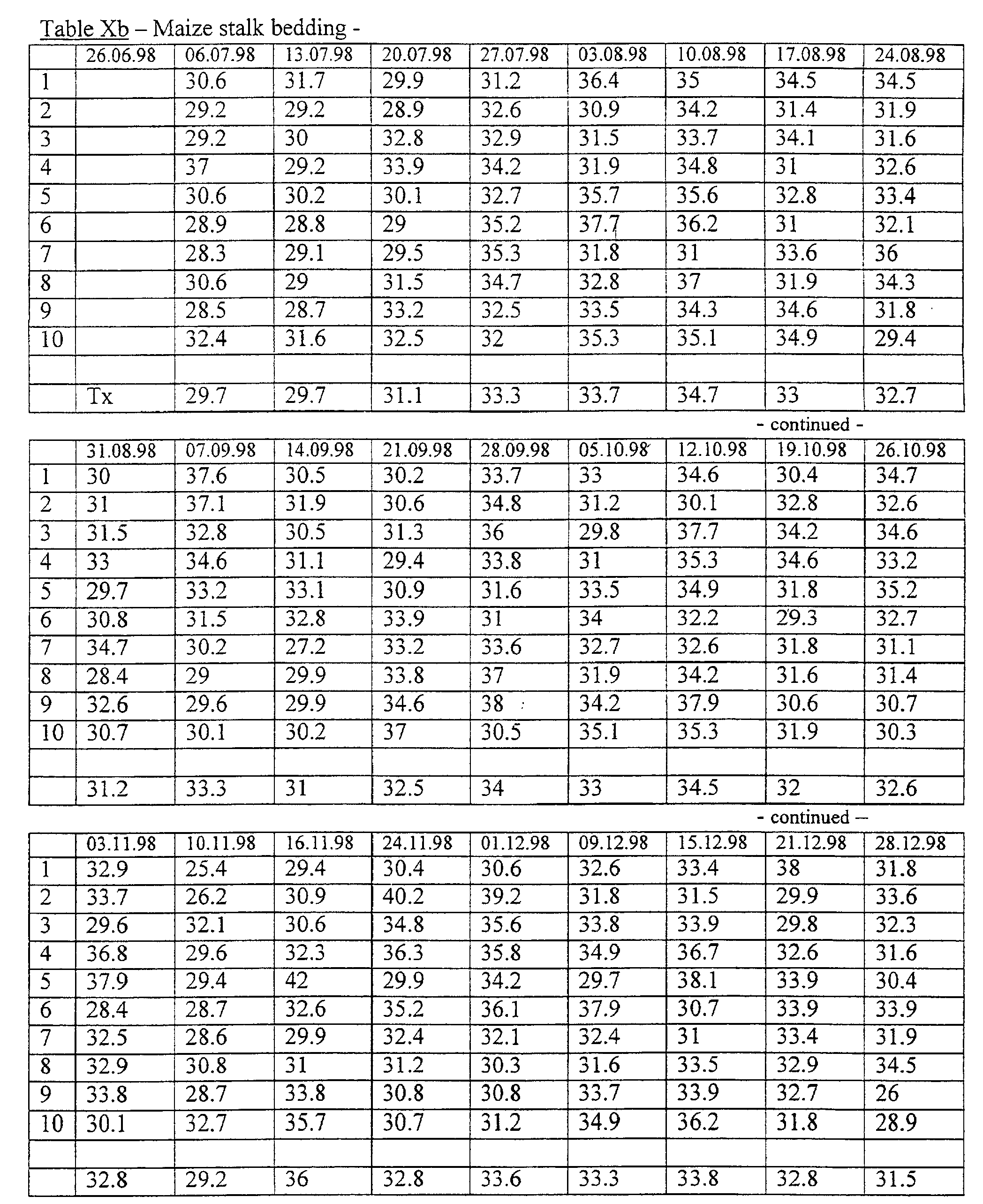

At the beginning of the test the average weight of the pigs in the two pens was 38 kg, the animals were then weighed individually after 45 days and finally at slaughter. The data relating to the intermediate and final weights are attached in Table Xc. Samples of the bedding were collected weekly on which analytical determinations of the following parameters were determined: dry substance, total nitrogen and ammoniacal nitrogen, lead, zinc and copper, the average values of which are recorded in Table Xd. All the determinations were performed in duplicate according to the A.O.A.C methods already mentioned in the section entitled 1-6. One part (50 g) of each weekly sample was subjected to microbiological analysis at the diagnostic microbiology laboratory of the Milan section of the "Istituto Zooprofilattico Sperimentale della Lombardia e dell'Emilia Romagna". These analyses were performed for the determination of E.Coli, Enterobactericae, Pseudomonas, and Mycetes according to the quality manual in use at the Institute. The results of the bacteriological examinations are reported in Table Xc.

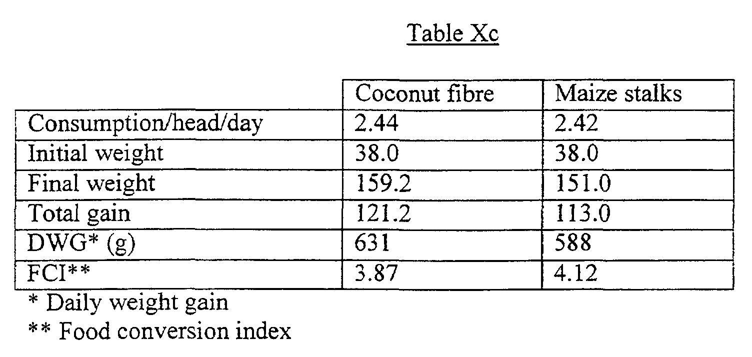

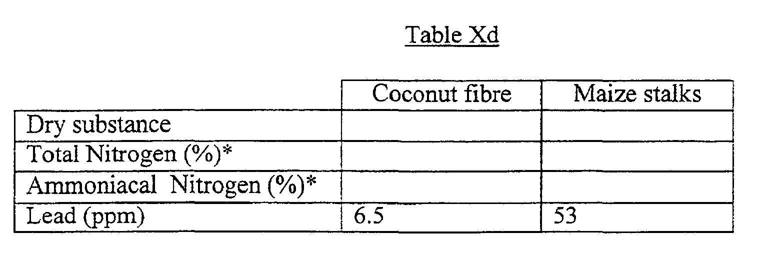

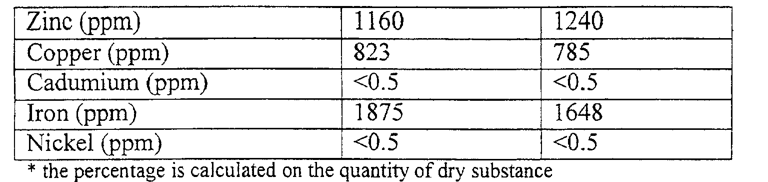

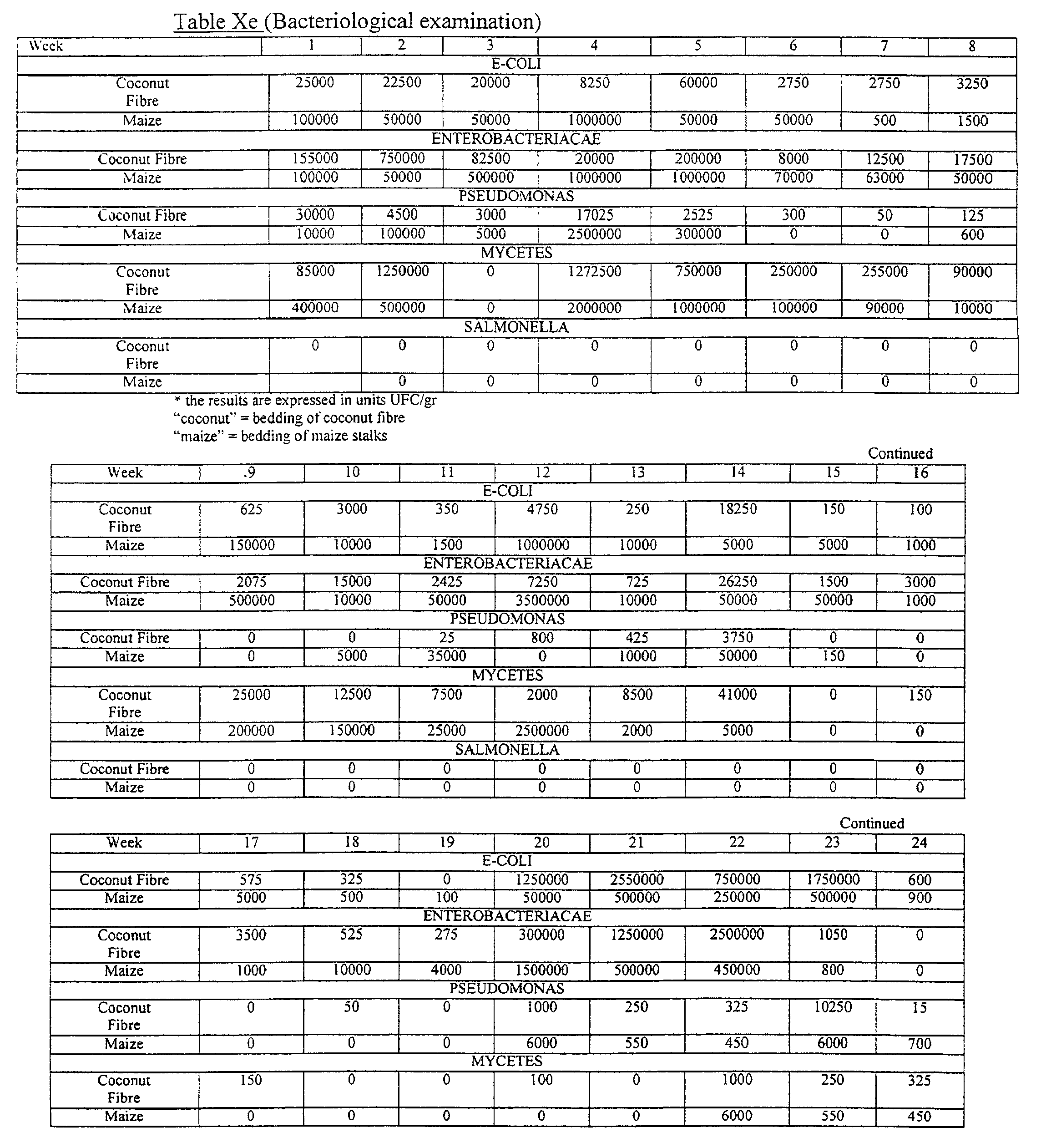

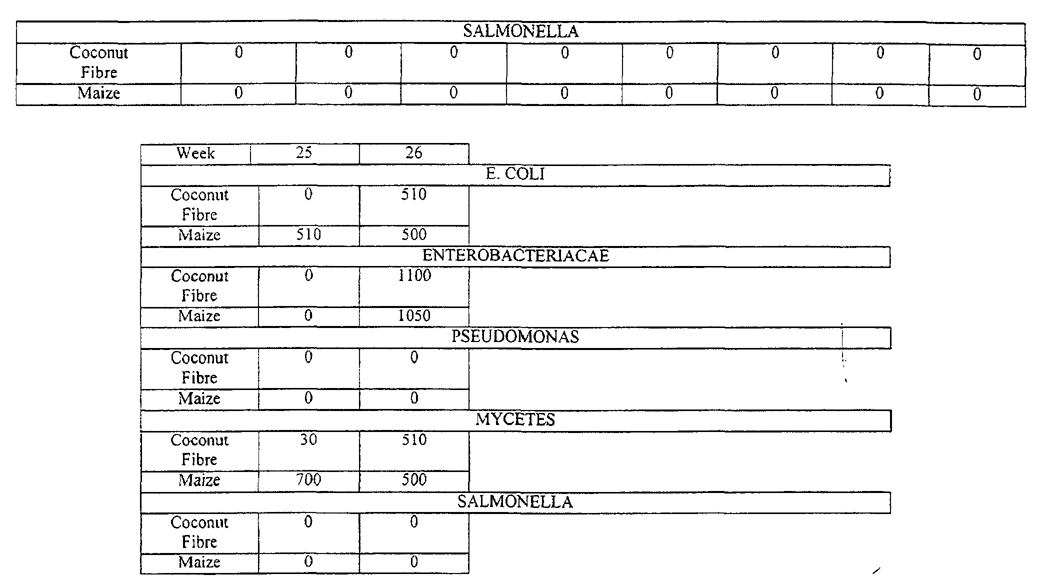

### EXAMPLE 11 - Analytical data on a sample of pig manure -

Analyses were performed on a sample of pig manure from a rearing group of pigs in which the bedding forming the subject of the invention had been used. The results were produced by the school of Minoprio, MAC, of the Lombardy region and are reported in Table XI.

**Table XI -**

| (-Analysis of pig manure) | |
|---|---|
| Moisture | 73.95% as such |
| Organic Carbon | 42.66% d.s |
| Total Nitrogen | 2.57% d.s |
| Total Phosphorus | 3.58% d.s |
| Total Potassium | 1.63% d.s |
| Total Iron | 1950 mg/Kg d.s |
| Total Manganese | 226 mg/Kg d.s |
| Total Copper | 858mg/Kg d.s |
| Total Zinc | 1210 mg/Kg d.s |
| Total Arsenic | 0.77 mg/Kg d.s |
| Total Mercury | 0.73 mg/Kg d.s |
| Total Cadmium | 0.01 mg/Kg d.s |
| Total Chrome | 6.92 mg/Kg d.s |
| Total Lead | 11.5 mg/Kg d.s |
| Total Nickel | 0.10 mg/Kg d.s |
| d.s.: dry substance | |

### EXAMPLE 12 - Analytical data on a sample of horse manure -

Analyses were performed on a sample of horse manure from a group of horses reared on bedding forming the subject of the invention. The horse manure was stored in an open manure heap from which three specimens were taken: a first specimen as soon as storage was started a second after 30 days from the commencement of the storage and a third after 45 days from the beginning of the storage. From each withdrawal a sample was obtained on which the analyses were performed. The results were produced by The School of Minoprio, MAC, of the Lombardy region and are reported in Table XII.

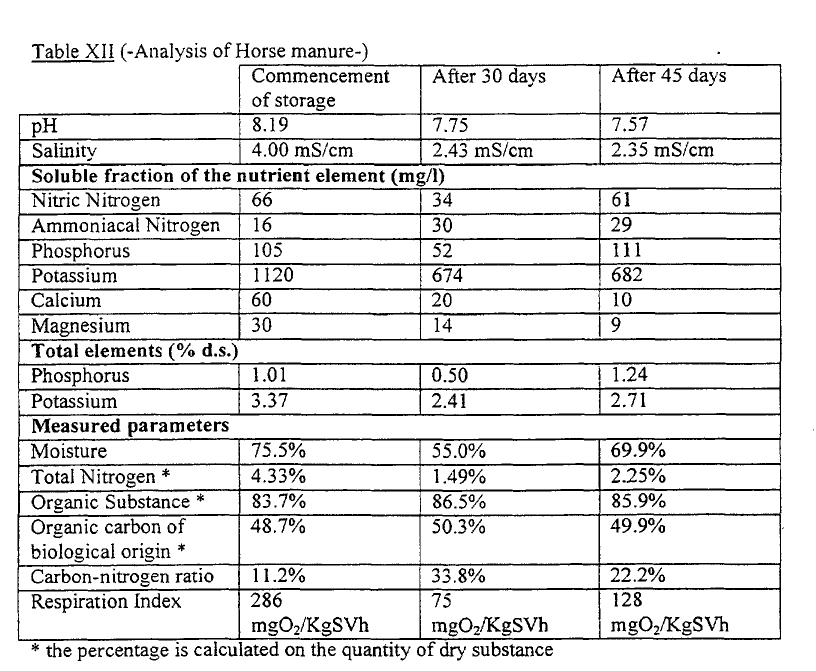

### EXAMPLE 13 - Volume of horse manure -

In a stable comprising 27 horses 3 homogeneous groups each of 9 horses were formed. The first group was reared on the bedding forming the subject of the invention, the second group on wood chippings and the third group on straw. The period of observation lasted 120 days and the quantity of manure produced by the animals was calculated daily. Each group of horses, all having the same feeding regime, was tended by a single person.

The data are recorded in Table XIII and refer to the quantities of manure taken on the first day, the thirtieth day, the ninetieth day and the one hundred and twentieth day.

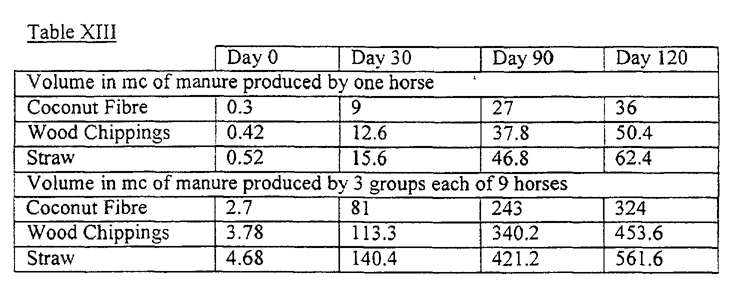

As can be seen from the data reported in Table XIII, the bedding forming the subject of the invention participates in reducing the environmental impact with reference to soil pollution by animal manures.

### EXAMPLE 14 - Egg deposition tests on serpents -

Four female pythons were each put in a terrarium having dimensions of 120 x 70 x 50 and equipped with the same lighting installations, with the same moisture and temperature. Each terrarium had a different bottom: 1 - sand, 2 - wood chippings, 3 - shredded paper and 4 - coconut fibre. Upon hatching of the eggs the percentage of births were evaluated and the data recorded in the table XIV. The terrarium with sand and that with coconut fibres gave the best hatching results. By evaluating, on the other hand, the general condition of the two serpents, that reared on the coconut fibres had a better state of cutaneous hydration and was more lively.

**Table XIV**

| Type of bottom | No. of eggs | Births |
|---|---|---|
| Sand | 7 | 100 |
| Wood chippings | 10 | 70 |
| Shredded paper | 9 | 77,8 |
| Coconut Fibre | 9 | 100 |

### EXAMPLE 15 - Cat acceptance tests -

There were taken 10 cats all different in age and sex and belonging to ten different owners. For each cat there was made available a conventional litter tray for their needs having dimensions 42 cm x 30 cm and on the bottom of this tray there was placed a layer of coconut fibre according to the invention about 3 cm deep. From the results recorded in Table 15 it is seen that 80% of the cats accepted the new litter, and only 20% remained uncertain for several days before then definitively accepting it.

**Table XV**

| Cat | Race | Sex | Age | Acceptance | Litter Tray Duration (days) |
|---|---|---|---|---|---|
| 1 | European | M | 2y | YES | 8 |
| 2 | Persian | M | 3y | YES/NO | 13 |
| 3 | Persian | F | 3y | YES | 11 |
| 4 | European | F | 2y | YES | 16 |
| 5 | Cross breed | F | 4y | YES | 9 |
| 6 | Siamese | M | 3y | YES/NO | 13 |
| 7 | Siamese | F | 2y | YES | 10 |
| 8 | Cross breed | F | 3y | YES | 16 |
| 9 | Persian | M | 6y | YES | 9 |
| 10 | European | M | 4y | YES | 8 |

From the preceding Table the advantages which the litter of the invention offers in relation to the time for which the litter itself lasts are evident.

### EXAMPLE 16 - Summary

The beddings utilised in the preceding examples for horses, cattle, pigs and rabbits were subjected to monitoring of the relative humidity, comparing the values with those obtainable with the use of straw bedding. The results are recorded in Table XVI.

**Table XVI**

| | Straw bedding | Coconut Fibre bedding |
|---|---|---|
| Horses | 43% | 55% |
| Pigs | 41% | 60% |
| Rabbits | 56% | 61% |
| Cattle | 46% | 60% |

By applying the method according to the invention the relative humidity is maintained at optimum values (55-60%) in the presence of different types of animals (and therefore in different ambient conditions).

It is apparent from the data set out above how the husbandry method of the present invention leads to a drastic reduction in manual operations providing nevertheless an improved hygienic situation with respect to husbandry methods utilised until now.

A series of tests of a purely indicative nature on reptiles, several species of birds and other domestic animals proved very interesting.

In summary, the use of coconut fibre bedding of particular characteristics in a husbandry method according to the invention makes it possible to contain the environmental diffusion of mycotoxins and the associated contamination of the animals: the general welfare and condition of the animals are thus improved (with consequent strong benefits on productivity) and the quality of food from the animals intended for human consumption is safeguarded in an effective manner.

The use of the bedding according to the invention creates optimal conditions not only for the wellbeing of the animals being reared, but also for the operators who work on the rearing: the use of coconut fibres in the bedding, in fact, as well as preventing the development and diffusion of pathogenic mycetes, significantly reduces the emission of dusts and noxious exhalations in the environment, thus preventing possible irritative phenomena for the operators and the occurrence of professional illnesses such as irritations and dermatopathies in general (in particular those of mycotic, allergic or excemaosic origin), bronchial asthmatic forms, hepatitis, pulmonary or hepatic tumours, renal pathologies in general and, finally, preserving the rearing installations from premature corrosions.

To this end the improvement in polluting emissions is verified experimentally by means of the following tests: into a reactor having a capacity of 2 litres there were introduced 150g of pig faeces and 450g of urine taken separately from animals held in metabolic cages to give a final content of dry substance of the organic sewage of 9.8%. In a second reactor, to the same quantity of organic fluid were added 30 g of coconut fibre of the type previously described, to give a final dry substance of 13.4%. The gases developed by the organic fluids within the reactors (provided with hermetic seals) were collected in glass columns of 2 litres capacity, full of saturated solution of CaCl₂ to prevent the diffusion of CO₂ into the liquid: the quantity of gas developed by the specimens was detected as the quantity of the CaCl₂ solution displaced. From the reactors there were then withdrawn samples of gas for quantatitive analysis (performed by means of a Carlo Erba 5300 Megaseries gas chromatograph provided with special cataylser for the determination of methane). The analyses were repeated for a period of 30 days.

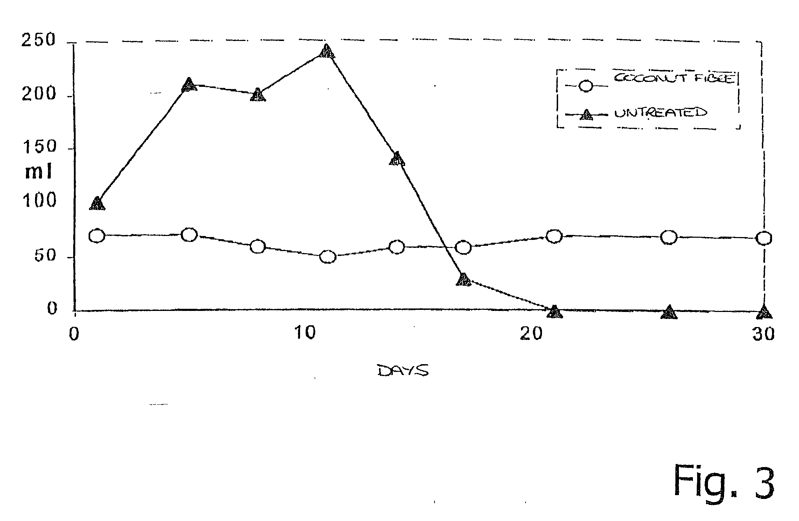

The results obtained are recorded in Table XVIb (initial composition of the samples) and XVIc (production of bio-gas) and in Figure 3.

**Table XVIb**

| | | Organic Substance | Total Nitrogen | Ammonicacal Nitrogen |
|---|---|---|---|---|
| Sewage alone | 9.83 | 9.02 | 0.91 | 0.15 |
| Sewage and Coconut Fibre | 13.41 | 12.38 | 0.86 | 0.14 |

**Table XVIc**

| | Total production of biogas (ml) | Daily production of biogas (ml) | Total methane (ml) |
|---|---|---|---|
| Sewage alone | 920 | 30.7 | 56 |
| Sewage and Coconut Fibre | 580 | 19.3 | 0 |

Following on from these results, which justify the reduction or even complete elimination of the unpleasant odours in animal husbandry achieved with the method of the invention, tests were conducted on the inhibition of unpleasant odours in places subject to fermentation processes similar to those which can occur in animal rearing, in particular in tips of solid urban refuse.

In a tip of small dimensions (area of 500 m x 500 m) there was utilised the following method: the refuse was sub-divided into two zones A and B; in zone A the refuse was accumulated in twenty heaps each of 10 m in height: half of the heaps were covered with respective layers of coconut fibre covering of the type utilised in the preceding examples, with layers of varying thickness between 20 cm and 1 m. The heaps covered with coconut fibre were free from odour even after six months; the optimum results, both for use of coconut fibre and for stability of the covering, were achieved with covering layers of a thickness of about 50 cm. In zone B, defined by two hollows of ten metres depth, the refuse was disposed in alternate layers of varying thickness between 20 cm and 1 m with layers of coconut fibre according to the preceding examples of the same thickness, in a first hollow and, in the same way, alternating with layers of soil of 1 m, in the second until both were filled. After six months no odours had developed from the hollow in which coconut fibres were used, whilst unpleasant odours were detectable from the second, especially in conditions of high humidity. The optimum results were achieved with layers having a thickness lying between 30 and 60 cm.

## Claims

1. A method of animal husbandry and rearing including the use of a bedding constituted by a composition comprising at least 40% by weight of coconut fibre, in particular of the type known as "cocopeat", **characterised in that** the coconut fibres utilised have a filamentary structure with dimensions which vary from a few microns to about 30 cm in length and from a few microns up to about 1 mm in thickness and have a carbon/nitrogen ratio, present in the dry substance, equal to about 114, a lignin content equal to about 45%, an ash content equal to about 8% and a raw protein content equal to about 3%.

2. A method according to claim 1, **characterised in that** the said composition comprises at least 50% by weight of coconut fibre.

3. A method according to claim 1 or claim 2, **characterised in that** it is for the rearing and husbandry of animals for slaughter or for milk, for example pigs, cattle, horses and rabbits, or for domestic pet animals, including birds, reptiles, rodents and exotic animals.

4. A method according to anyone of the foregoing claims, **characterised by** the use of coconut fibres which have an increase in volume less than 5% in the first 15 days of use as bedding and by a reduction in the rearing cycle time of at least 10-20%.

5. A method according to anyone of the foregoing Claims, **characterised in that** the said composition is utilised both in loose form, to be scattered on the ground, and in the form of pressed briquettes or bales which can be disintegrated, dispersed simply on the ground and with different dimensions depending on the animal housing.

6. Method according to Claim 5, **characterised in that** the fibres before being utilised are subjected to a milling treatment without reducing them to powder form.

7. A method according to any preceding claim, **characterised in that** the said bedding is constituted by a composition comprising coconut fibres and at least one other component chosen from the group constituted by natural clays, synthetic clays, peat and mixtures of these.

8. A method according to Claim 7, **characterised in that** the said bedding is constituted by a composition further comprising at least one other component chosen from the group consisting of: cereal straw, sugar cane fibre, bicarbonate and mixtures of these.

9. Use of a material based on coconut fibre, in particular of the type known as "cocopeat", for the production of animal bedding, said coconut fibres having a filamentary structure with dimensions which vary from a few microns to about 30 cm in length and from a few microns up to about 1 mm in thickness and have a carbon/nitrogen ratio, present in the dry substance, equal to about 114, a lignin content equal to about 45%, an ash content equal to about 8% and a raw protein content equal to about 3%.

10. Use of a material based on coconut fibre, in particular of the type known as "cocopeat, in foodstuffs for animal use, said coconut fibres having a filamentary structure with dimensions which vary from a few microns to about 30 cm in length and from a few microns up to about 1 mm in thickness and have a carbon/nitrogen ratio, present in the dry substance, equal to about 114, a lignin content equal to about 45%, an ash content equal to about 8% and a raw protein content equal to about 3%.

11. Use according to Claim 11, in which the animal foodstuffs are conserved on a layer of the said coconut-based materials.

12. A method comprising the use of a composition containing at least 50% of coconut fibre for covering the material subject to the possible fermentation, in particular a refuse heap, **characterised in that** said coconut fibres having a filamentary structure with dimensions which vary from a few microns to about 30 cm in length and from a few microns up to about 1 mm in thickness and have a carbon/nitrogen ratio, present in the dry substance, equal to about 114, a lignin content equal to about 45%, an ash content equal to about 8% and a raw protein content equal to about 3%.

13. A method according to Claim 12, **characterised in that** the tip is filled with a system comprising alternate layers of refuse and a composition containing coconut fibre.

14. A method according to Claim 13, **characterised in that** each layer has a thickness lying between 20 cm and 1 metre, preferably between 30cm and 60cm.

15. A method according to Claim 14, **characterised in that** a layer of the composition containing at least 50% coconut fibre is positioned covering a heap of refuse defining a hill or heap.

16. A method according to Claim 15, **characterised in that** the said layer has a thickness of about 50cm.

## Patentansprüche

1. Verfahren zur Tierhaltung und -aufzucht einschließlich der Verwendung einer Einstreu, die eine Mischung mit wenigstens 40 Gew.-% Kokosfasern, insbesondere vom Typ mit der Bezeichnung "Cocopeat", darstellt, **dadurch gekennzeichnet, dass** die verwendeten Kokosfasern eine faserförmige Struktur aufweisen, deren Abmessungen was die Länge betrifft zwischen einigen wenigen Mikron bis etwa 30 cm und was die Dicke betrifft zwischen einigen wenigen Mikron bis etwa 1 mm liegen und die ein Kohlenstoff/Stickstoffverhältnis in der Trockenmasse von ungefähr 114, einen Ligningehalt von ungefähr 45%, einen Aschegehalt von ungefähr 8% und einen Rohproteingehalt von ungefähr 3% aufweisen.

2. Verfahren nach Anspruch 1, **dadurch gekennzeichnet, dass** die Zusammensetzung wenigstens 50 Gew.-% Kokosfaser enthält.

3. Verfahren nach Anspruch 1 oder Anspruch 2, **dadurch gekennzeichnet, dass** es für die Aufzucht und Haltung von Mast- und Milchtieren, beispielsweise Schweinen, Rindern, Pferden und Kaninchen, oder für Haustiere, einschließlich Vögel, Reptilien, Nagetiere und exotische Tiere, gedacht ist.

4. Verfahren nach einem der vorstehend genannten Ansprüche, **gekennzeichnet durch** die Verwendung von Kokosfasern, deren Volumenzunahme in den ersten 15 Tagen der Verwendung der Einstreu weniger als 5% beträgt, und **durch** eine Herabsetzung der Länge des Aufzuchtzyklus um wenigstens 10-20%.

5. Verfahren nach einem der vorstehend genannten Ansprüche, **dadurch gekennzeichnet, dass** die Zusammensetzung sowohl in loser Form zum Ausstreuen auf dem Boden als auch in Form gepresster Briketts oder Ballen, die zerkleinert und einfach und abhängig von der Art des Tierstalls unterschiedlich bemessen auf dem Boden verteilt werden können, verwendet wird.

6. Verfahren nach Anspruch 5, **dadurch gekennzeichnet, dass** die Fasern vor der Verwendung einem Mahlverfahren unterworfen werden, ohne dabei zu Pulverform vermahlen zu werden.

7. Verfahren nach einem der vorstehend genannten Ansprüche, **dadurch gekennzeichnet, dass** die Einstreu eine Zusammensetzung umfassend Kokosfasern und wenigstens einen weiteren Bestandteil ausgewählt aus der Gruppe bestehend aus natürlichen Tonen, synthetischen Tonen, Torf und Mischungen davon darstellt.

8. Verfahren nach Anspruch 7, **dadurch gekennzeichnet, dass** die Einstreu eine Zusammensetzung darstellt, die weiterhin wenigstens einen weiteren Bestandteil ausgewählt aus der Gruppe bestehend aus Getreidestroh, Zuckerrohrfasern, Bicarbonat und Mischungen davon aufweist.

9. Verwendung eines Materials auf der Grundlage von Kokosfasern, insbesondere vom Typ mit der Bezeichnung "Cocopeat", zur Herstellung von Einstreu für Tiere, wobei die Kokosfasern eine faserförmige Struktur aufweisen, deren Abmessungen was die Länge betrifft zwischen einigen wenigen Mikron bis etwa 30 cm und was die Dicke betrifft zwischen einigen wenigen Mikron bis etwa 1 mm liegen und die ein Kohlenstoff/Stickstoffverhältnis in der Trockenmasse von ungefähr 114, einen Ligningehalt von ungefähr 45%, einen Aschegehalt von ungefähr 8% und einen Rohproteingehalt von ungefähr 3% aufweisen.

10. Verwendung eines Materials auf der Grundlage von Kokosfasern, insbesondere vom Typ mit der Bezeichnung "Cocopeat", in Futtermitteln für Tiere, wobei Kokosfasern eine faserförmige Struktur aufweisen, deren Abmessungen was die Länge betrifft zwischen einigen wenigen Mikron bis etwa 30 cm und was die Dicke betrifft zwischen einigen wenigen Mikron bis etwa 1 mm liegen und die ein Kohlenstoff/Stickstoffverhältnis in der Trockenmasse von ungefähr 114, einen Ligningehalt von ungefähr 45%, einen Aschegehalt von ungefähr 8% und einen Rohproteingehalt von ungefähr 3% aufweisen.

11. Verwendung nach Anspruch 11, wobei das Tierfutter auf einer Schicht des Materials auf Kokosbasis konserviert ist.

12. Verfahren umfassend die Verwendung einer Zusammensetzung mit wenigstens 50% Kokosfasern zum Bedecken von Material, das einer möglichen Fermentation ausgesetzt ist, insbesondere einer Abfallhalde, **dadurch gekennzeichnet, dass** die Kokosfasern eine faserförmige Struktur aufweisen, deren Abmessungen was die Länge betrifft zwischen einigen wenigen Mikron bis etwa 30 cm und was die Dicke betrifft zwischen einigen wenigen Mikron bis etwa 1 mm liegen und die ein Kohlenstoff/Stickstoffverhältnis in der Trockenmasse von ungefähr 114, einen Ligningehalt von ungefähr 45%, einen Aschegehalt von ungefähr 8% und einen Rohproteingehalt von ungefähr 3% aufweisen.

13. Verfahren nach Anspruch 12, **dadurch gekennzeichnet, dass** die Abfallhalde mit einem System aufgefüllt wird, in dem sich Schichten aus Abfall und einer Zusammensetzung mit Kokosfasern abwechseln.

14. Verfahren nach Anspruch 13, **dadurch gekennzeichnet, dass** jede Schicht eine Dicke zwischen 20 cm und 1 Meter, vorzugsweise zwischen 30 cm und 60 cm, aufweist.

15. Verfahren nach Anspruch 14, **dadurch gekennzeichnet, dass** eine Schicht der Zusammensetzung mit wenigstens 50% Kokosfasern so aufgebracht ist, dass eine Abfallhalde, die einen Hügel oder einen Haufen darstellt, bedeckt ist.

16. Verfahren nach Anspruch 15, **dadurch gekennzeichnet, dass** die Schicht eine Dicke von ungefähr 50 cm aufweist.

## Revendications

1. Procédé de gestion animale et d'élevage comprenant l'utilisation d'une litière constituée d'une composition comprenant au moins 40% en poids de fibre de coco, en particulier du type connu comme "cocopeat", **caractérisé en ce que** les fibres de coco utilisées ont une structure filamenteuse dont les dimensions varient de quelques microns à environ 30 cm en longueur et de quelques microns jusqu'à environ 1 mm en épaisseur et ont un rapport carbone/azote, présent dans la substance sèche, égal à environ 114, une teneur en lignine égale à environ 45%, une teneur en cendres égale à environ 8% et une teneur en protéine brute égale à environ 3%.

2. Procédé selon la revendication 1, **caractérisé en ce que** ladite composition comprend au moins 50% en poids de fibre de coco.

3. Procédé selon la revendication 1 ou la revendication 2, **caractérisé en ce qu'**il est destiné à l'élevage et à la gestion d'animaux pour l'abattage ou pour le lait, par exemple des porcs, du bétail, des chevaux et des lapins, ou pour les animaux familiers domestiques comprenant les oiseaux, les reptiles, les rongeurs et les animaux exotiques.

4. Procédé selon l'une quelconque des revendications précédentes, **caractérisé par** l'utilisation de fibres de coco qui ont une augmentation de volume inférieure à 5% lors des 15 premiers jours d'utilisation comme litière et par une réduction de la durée du cycle d'élevage d'au moins 10-20%.

5. Procédé selon l'une quelconque des revendications précédentes, **caractérisé en ce que** ladite composition est utilisée à la fois en vrac pour être éparpillée sur le sol, et sous la forme de briquettes compressées ou de balles qui peuvent être désintégrées, simplement dispersées sur le sol et avec différentes dimensions dépendant du logement de l'animal.

6. Procédé selon la revendication 5, **caractérisé en ce que** les fibres, avant d'être utilisées, sont soumises à un traitement de mouture sans les réduite en poudre.

7. Procédé selon l'une des revendications précédentes, **caractérisé en ce que** ladite litière est constituée par une composition comprenant des fibres de coco et au moins un autre composant choisi dans le groupe formé par des argiles naturelles, des argiles synthétiques, de la tourbe et des mélanges de celles-ci.

8. Procédé selon la revendication 7, **caractérisé en ce que** ladite litière est constituée par une composition comprenant en outre au moins un autre composant choisi parmi le groupe formé de paille de céréales, fibre de canne à sucre, bicarbonate et des mélanges de ceux-ci.

9. Utilisation d'une matière basée sur la fibre de coco, en particulier du type connu comme «cocopeat », pour la production de litière animale, lesdites fibres de coco ayant une structure filamenteuse dont les dimensions varient de quelques microns à environ 30 cm en longueur et de quelques microns jusqu'à environ 1 mm en épaisseur et ont un rapport carbone/azote, présent dans la substance sèche, égal à environ 114, une teneur en lignine égale à environ 45%, une teneur en cendres égale à environ 8% et une teneur en protéine brute égale à environ 3%.

10. Utilisation d'une matière basée sur la fibre de coco, en particulier du type connu comme «cocopeat », dans les denrées alimentaires à usage animal, lesdites fibres de coco ayant une structure filamenteuse dont les dimensions varient de quelques microns à environ 30 cm en longueur et de quelques microns jusqu'à environ 1 mm en épaisseur et ont un rapport carbone/azote, présent dans la substance sèche, égal à environ 114, une teneur en lignine égale à environ 45%, une teneur en cendres égale à environ 8% et une teneur en protéine brute égale à environ 3%.

11. Utilisation selon la revendication 11, dans laquelle les denrées alimentaires animales sont conservées sur une couche desdits matières à base de noix de coco.

12. Procédé comprenant l'utilisation d'une composition contenant au moins 50% de fibres de coco pour couvrir la matière sujette à une possible fermentation, en particulier un tas d'ordures, **caractérisé en ce que** lesdites fibres de coco ont une structure filamenteuse dont les dimensions varient de quelques microns à environ 30 cm en longueur et de quelques microns jusqu'à environ 1 mm en épaisseur et ont un rapport carbone/azote, présent dans la substance sèche, égal à environ 114, une teneur en lignine égale à environ 45%, une teneur en cendres égale à environ 8% et une teneur en protéine brute égale à environ 3%.

13. Procédé selon la revendication 12, **caractérisé en ce que** la décharge est remplie selon une méthode comprenant des couches alternées d'ordures et d'une composition contenant de la fibre de coco.

14. Procédé selon la revendication 13, **caractérisé en ce que** chaque couche a une épaisseur s'étendant entre 20 cm et 1 mètre, de préférence entre 30 cm et 60 cm.

15. Procédé selon la revendication 14, **caractérisé en ce qu'**une couche de la composition contenant au moins 50% de fibre de coco est placée pour couvrir un tas d'ordures formant un monticule ou un tas.

16. Procédé selon la revendication 15, **caractérisé en ce que** ladite couche a une épaisseur d'environ 50 cm.
